Europäisches Patentamt

**European Patent Office**

Office européen des brevets

(11) Publication number: **0 173 187 B1**

(12) **EUROPEAN PATENT SPECIFICATION**

(45) Date of publication of patent specification: **20.03.91**  (51) Int. Cl.⁵: **H01M 2/02**

(21) Application number: **85110277.2**

(22) Date of filing: **16.08.85**

(54) Alkaline primary battery with improved seal and method of manufacturing same.

(30) Priority: **17.08.84 US 641739**

(43) Date of publication of application:
**05.03.86 Bulletin 86/10**

(45) Publication of the grant of the patent:
**20.03.91 Bulletin 91/12**

(84) Designated Contracting States:
**BE CH DE FR GB IT LI NL SE**

(56) References cited:
**DE-A- 1 936 265**
**DE-A- 2 923 688**
**FR-A- 2 089 487**
**GB-A- 907 896**

**PATENTS ABSTRACTS OF JAPAN, vol. 7, no.
132 (E-180)[1277], 9th June 1983; & JP-A-58
48 361 (FUJI DENKI KAGAKU K.K.) 22-03-1983**

**PATENTS ABSTRACTS OF JAPAN, vol. 8, no.
281 (E-286)[1718], 21st December 1984; & JP-
A-59 148 268 (FUJI DENKI KAGAKU K.K.)
24-08-1984**

**PATENTS ABSTRACTS OF JAPAN, vol. 7, no.
243 (E-207)[1388], 28th October 1983; & JP-
A-58 131 651 (MATSUSHITA DENKI SANGYO**

K.K.) 05-08-1983

**PATENTS ABSTRACTS OF JAPAN, vol. 5, no.
117 (E-67)[789], 28th July 1981; & JP-A-56 57
255 (TOKYO SHIBAURA DENKI K.K.)
19-05-1981**

**PATENTS ABSTRACTS OF JAPAN, vol. 6, no.
215 (E-138)[1093], 28th October 1982; & JP-
A-57 119 456 (DAINI SEIKOSHA K.K.)
24-07-1982**

(73) Proprietor: **RAYOVAC Corporation
101 East Washington Avenue
Madison Wisconsin 53703(US)**

(72) Inventor: **Kulibert, Gregory Stephen
455 N. Westfield Street
Oshkosh Wisconsin 54901(US)**
Inventor: **Kenyon, Kenneth Harry
558 Hillcrest Drive
Verona Wisconsin 53593(US)**

(74) Representative: **Behrens, Dieter, Dr.-Ing. et al
Wuesthoff & Wuesthoff Patent- und Recht-
sanwälte Schweigerstrasse 2
W-8000 München 90(DE)**

## Description

The invention relates to alkaline primary batteries and, in particular, to the seal which prevents the leakage of electrolyte and a method of manufacturing such alkaline batteries.

Alkaline primary batteries and, in particular, alkaline manganese dioxide/zinc dry cells ($MnO_2$/Zn), have been a successful commercial development. When manufactured in a cylindrical configuration, the battery seal is typically made by compressing a plastic member within a metal can by crimping the open end of the can as disclosed by Ralston and KO in U.S. Patent No. 3 663 301. More particularly, the typical commercial use of this type seal employs a nickel plated steel can as the positive current collector, a plastic seal member, typically of nylon or polypropylene, and a sealant, such as bitumen, between the metal can and the plastic seal member. While such seals performs satisfactorily when the steel can is plated with nickel, if the steel can is unplated, such seals are very poor. The poor seals are probably due to differences in bond strength of bitumen and steel and bitumen and nickel plated steel.

From "Patent Abstracts of Japan", Vol.7, No.243(E-207) (1388), Oct. 23, 1983, it is known to apply one of a number of different tacky alkali resistant coatings to nickel-plated positive metal cans in order to improve close adhesion between a nylon or polyethylene seal ring of L-shaped section and a seal plate and thus provide a leakproof battery.

It is an object of the invention as defined in the appendant claims to provide for an even stronger seal for an alkaline cylindrical cell and a method of manufacture of such cell, especially wherein the metal cans, i.e., the positive current collectors, are unplated.

A polymeric resin, which upon drying becomes a thin adherent plastic film, when applied to the surface of the metal can of an alkaline dry cell, in the area of the seal greatly improves the strength of the seal, thereby reducing leakage problems associated therewith.

The advantages of the present invention are achieved by applying a polymeric resin to the surface of the unplated metallic container (positive current collector) in the area of the battery seal. The resulting thin plastic film forms a bond between the metallic container and the sealant covered seal member, normally used in battery seals. By practicing the present invention, the positive current container can be unplated steel, which reduces the cost of manufacturing alkaline cylindrical cells.

In accordance with a preferred embodiment of the invention, the interior surface of the metal can of an alkaline dry cell is coated with a polymeric primer. This primer, which may be applied by various techniques, including painting, spraying or dipping, contains an alkaline resistant organic binder dissolved in a compatible solvent. Spraying is the preferred methof of applying the organic primer.

After being applied to the metal can, the primer is dried at elevated temperatures, which permits the evaporation of the solvent and allows for the adhesion of a thin, resin coating to the metallic container, The resulting coating is typically 15 to 20 $\mu$m (0.0006" to 0.0008") in thickness, but may range from 25 to 50 $\mu$m (0.0001" to 0.0002") in thickness.

The binder is a film forming polymer which is compatible with alkaline battery components. Film forming binders which hydrolyze or oxidize in the presence of the electrolyte cannot be used in practicing the present invention. The present invention can be successfully practiced with a wide range of polymeric binders including ABS (acrylonitrile butadiene styrene), PVC (polyvinyl chloride), epoxies, fluorcarbons, nylons, polypropylene, polybutylene, polystyrenes and neoprenes. The present invention may also be practiced with binders which are rubbers and/or elastomers, such as, isobutylene, isoprene, chloroprene, polysulfide, ethylene propylene, chlorinated and chlorosulfonated polyethylene, fluorosilicone and propylene oxide. However, materials which are soluble in KOH, the usual electrolyte found in alkaline battery systems, such as CMC, should not be used in practicing the present invention.

The solvent portion or the resin must wet the surface of the metal container. It must also be compatible with alkaline battery components and with the binder. The present invention can be successfully practiced with solvents such as ethyl acetate, butanol, methyl ethyl ketone, methyl isobutyl ketone and paraffinic hydrocarbon liquids.

The polymeric resin, which may itself be conductive, may contain other ingredients such as fillers. Particularly, a non-conductive polymeric resin may contain small amounts of conductive filler materials such as carbon or metal powder.

When carbon is added as the conductive filler, the weight percent of carbon in the film after the evaporation of the solvent should be less than 40%. Increasing the amount of carbon, which reduces the amount of binder in the plastic film, decreases the mechanical integrity of the plastic film and increases the probability that the conductive film will not remain adhered to the surface of the metal container.

In order to provide the advantages disclosed herein the plastic film must be impervious to the alkaline electrolyte. Therefore, the plastic film must be continous in the area of the seal/sealant and metal container interface.

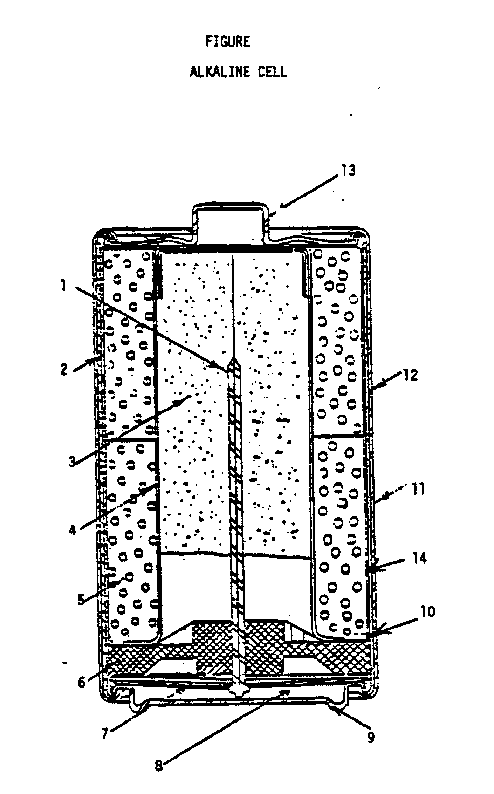

Figure 1 is a drawing of an alkaline cylindrical battery incorporating this invention.

Figure 1 is a drawing of an alkaline cylindrical battery constructed according to the present invention. The positive current collector, a drawn steel container 2, open on one end and about 0.010"(0,25 mm)thick, has a coating 14 applied to its interior surfaces. Two cathode annular rings 5, formed such that their outside diameters are greater than the inside diameter of the positive current collector, are forced into the positive current collector, forming a pressure contact therewith. A bead 10 is rolled into the container near the open end to support the sealing disk. A separator 4 and an anode 3 are placed inside of the cathode rings. A sealing disk 6 containing a negative current collector 1 is placed into the open end of the container and in contact with the bead. The open end of the container is crimped over the sealing disk thus compressing it between the crimp and the bead to seal the cell. An insulation washer 7 with a central aperture is placed over the crimped end of the cell such that the end of the negative current collector 1 protrudes through the aperture. A contact spring 8 is affixed to the end of the negative current collector 1. Terminal caps 9 and 13 are placed into contact with the contact spring 8 and the positive current collector 2, respectively, and an insulating tube 12 and steel shell 11 are placed around the cell and crimped on their ends to hold the terminal caps in place.

Examples of the utility of the present invention will now be explained.

## Example 1

Three sets of adhesion test samples were prepared. The first set used a substrate of nickel-plated steel, the second set used a substrate of unplated steel, and the third set used a substrate of unplated steel coated with P-70 primer ( a conductive resin of PVC and carbon black dissolved in solvent manufactured by Pervel Industries). On to each substrate a metal washer with a 0.5" (12,7 mm) diameter opening was placed and a molten bitumen, Pioneer 135 (Witco Chemical Corp.), was poured inside the washer. The 5/8" (15,9 mm) diameter head of a bolt was then placed on the molten bitumen. These samples were then arranged in a tensile testing machine so that the force required to separate the bitumen from the substrate could be measured. The results in Table I show that the bond stregth was improved by use of the P-70 primer. In Table 1, the failure mode designation indicates the location of the separation. Cohesive failure is desired as this indicates that the weakest point of the bond is within the bitumen sealant itself, not at the substrate surface.

### Table 1

**0°F (12,5°)   Adhesion Test Using Pioneer 135 Bitumen**

| Substrate | Adhesion, lb/.5" dia. (kg/mm dia.) | | Failure Mode |
|---|---|---|---|
| Nickel plated steel | 3.9 | 1,4 | Cohesive |
| Unplated steel | 2.4 | 0,8 | Adhesive |
| P-70 primed, unplated steel | 4.6 | 1,6 | Cohesive |

## Example 2

Two sets of alkaline manganese D-size cells were constructed using unplated steel cans as the positive current collector. The cans for the first set of batteries were not treated, while the metal containers used for the second set of batteries had their inner surfaces sprayed with P-70 primer. Batteries were then manufactured identically from the two sets of cans according to Figure 1. The cells were leakage tested by subjecting them to a thermal shock cycle consisting of 8 hours at 130° F (55° C) followed by 16 hours at 0° F (-12,5° C) for a total of three cycles. The outer wrap of each cell, consisting of the two terminal caps, the paper insulating tube, the insulating washer, the contact spring and the steel shell were then removed, and the number of cells with leakage between the sealing disks and the metal cans were counted. The data shown in Table II indicates that the present invention greatly improves the seal in alkaline cylindrical cells.

## Table II

### Three 0°F – 130°F (–12,5°C – 55°C) Thermal Shocks

| Can | Primer | % Leakage |
|-----|--------|-----------|
| Unplated steel | None | 100% |
| Unplated steel | P-70 | 0% |

From the results in the foregoing examples add the referenced draining, it is evident that the alkaline primary cells of this invention are superior to conventional alkaline primary batteries. While the foregoing examples used the alkaline $Mn_2O/Zn$ electrochemical system in a commercial cylindrical configuration, the present invention includes other alkaline electrochemical systems which use an electrolyte which is not corrosive to the positive current collector.

## Claims

1. An alkaline electrochemical cell having a sealing means comprised of a sealant disposed between the interior surface of an unplated metallic container(2), which functions as a positive current collector, and a plastic seal member (6), characterized in that
the interior unplated surface of the metallic container (2) is provided with an alkali-resistant conductive plastic coating (14).

2. An alkaline electrochemical cell according to claim 1, wherein the sealant is bitumen.

3. An alkaline electrochemical cell according to claim 1 or 2, wherein the the plastic seal member (6) is comprised of nylon or polypropylene.

4. An alkaline electrochemical cell as in claim 1, 2 or 3, wherein the said alkali-resistant conductive plastic coating (14) comprises conductive fillers.

5. An alkaline electrochemical cell as in claim 4, wherein the conductive fillers are carbon particles selected from the group consisting of acetylene black, carbon black, and graphite.

6. An alkaline electrochemical cell as in claim 1 or 5, wherein the weight percent of said fillers ranges up to 40.

7. An alkaline electrochemical cell as in claim 1 wherein the metallic container (2) is unplated steel.

8. Alkaline electrochemical cell according to any of claims to 7, characterized in that
the plastic coating is provided only in the area where the seal/sealant and metal container contact.

9. An alkaline electrochemical cell according to any of claims 1 to 8,
characterized in that
the plastic coating is 2.5 to 50 $\mu$m thick, preferably 15 to 20 $\mu$m thick.

10. An alkaline electrochemical cell according to claim 1 wherein the said alkali-resistant conductive coating is not soluble in the alkaline electrolyte.

11. An alkaline electrochemical cell according to claim 1 wherein the said alkali-resistant conductive coating is not hydrolyzed or oxidized in the alkaline electrolyte.

12. Method of manufacture of an alkaline electrochemical cell according to claim 1,
characterized by comprising the following steps:
(a) coating the interior unplated surface of the unplated metallic container, serving as the positive current collector with an alkaline-resistant, conductive polymeric resin;

(b) drying the polymeric resin coating, thereby forming an alkaline-resistant conductive plastic film on the surface of said metallic container;

(c) placing alkaline battery components within said metallic container; and

(d) disposing a sealant between a plastic seal member and between the interior surface of said metallic container.

13. A method of manufacturing an alkaline electrochemical cell according to claim 12,
characterized in that
the metallic container is unplated steel.

14. A method of manufacturing an alkaline electrochemical cell according to claim 12,
characterized in that
the sealant is bitumen.

15. A method of manufacturing an alkaline electrochemical cell according to claim 12,
characterized in that
the plastic seal member is comprised of nylon or polypropylene.

16. A method of manufacturing an alkaline electrochemical cell according to claim 12 which further comprises the step of: sealing said alkaline cell by crimping the open end of said metallic container.

17. The method according to claim 12
characterized in that
the metallic container is coated with an alkali-resistant polymeric resin comprising a conductive polymeric binder dissolved in a solvent.

18. The method according to claim 12 or 17
characterized in that
the polymeric binder does not dissolve in the alkaline electrolyte.

19. The method according to claim 12, 17 or 18
characterized in that
the polymeric binder is not hydrolyzed or oxidized by the alkaline electrolyte.

20. The method according to any of claims 12, 17, 18 or 19
characterized in that
the solvent wets the surface of the metallic container.

21. The method according to any of claims 12 to 20,
characterized in that
the alkali-resistant conductive polymeric resin comprises fillers which are carbon particles selected from the group consisting of acetylene black, and graphite.

22. The method according to claim 21,
characterized in that
the fillers are present in such an amount which range in weight percent up to 40.

23. The method according to any of claims 12 or 17 to 22
characterized in that
the alkali-resistant conductive coating is applied in such an amount to form a plastic film that is 2,5 μm to 50 μm thick, preferably 15 μm to 20 μm thick.

24. The method according to claim 12, or 17 or 23,
characterized in that
the polymeric resin is applied to the metal container only in the area where the seal/sealant and metal container contact.

**Revendications**

1. Pile alcaline électrochimique, ayant une garniture étanche comportant un matériau d'étanchéité disposé entre la surface intérieure d'un conteneur métallique (2) non plaqué, servant comme collecteur de courant positif, et un joint (6) en plastique,
caractérisée en ce que
la surface intérieure non plaquée du conteneur métallique (2) est munie d'un couchage (14) en plastique, conducteur, résistant aux alcalis.

2. Pile alcaline électrochimique selon la revendication 1, dans laquelle le matériau d'étanchéité est du bitume.

3. Pile alcaline électrochimique selon la revendication 1 ou 2,
dans laquelle le joint (6) en plastique comporte du nylon ou du polypropylène.

4. Pile alcaline électrochimique selon la revendication 1, 2 ou 3,
dans laquelle ledit couchage (14) en plastique, conducteur, résistant aux alcalis, comporte des matières de charge conductrices.

5. Pile alcaline électrochimique selon la revendication 4, dans laquelle les matières de charge conductrices sont des particules de charbon choisies dans le groupe comprenant le noir d'acétylène, le noir de fumée et le graphite.

6. Pile alcaline électrochimique selon la revendication 1 ou 5,
dans laquelle le pourcentage en poids desdites matières de charge se monte jusqu'à 40.

7. Pile alcaline électrochimique selon la revendication 1, dans laquelle le conteneur métallique (2) est en acier non plaqué.

8. Pile alcaline électrochimique selon l'une quelconque des revendications 1 à 7, caractérisée en ce que le couchage en plastique est prévu seulement dans la zone où le joint/le matériau d'étanchéité et le conteneur métallique se touchent.

9. Pile alcaline électrochimique selon l'une quelconque des revendications 1 à 8,
caractérisée en ce que
le couchage en plastique a une épaisseur de 2,5 à 50 μm, de préférence entre 15 et 20 μm.

10. Pile alcaline électrochimique selon la revendication 1, dans laquelle ledit couchage conducteur, résistant aux alcalis, n'est pas soluble dans l'électrolyte alcalin.

11. Pile alcaline électrochimique selon la revendication 1, dans laquelle ledit couchage conducteur, résistant aux alcalis, n'est pas hydrolysé ou oxydé dans l'électrolyte alcalin.

12. Procédé de fabrication d'une pile alcaline électrochimique selon la revendication 1,
caractérisé par les phases suivantes:

   a) recouvrir la surface intérieure non plaquée du conteneur métallique non plaqué, servant de collecteur de courant positif, d'une résine polymère conductrice, résistant aux alcalis,
   b) faire sécher le couchage en résine polymère, de manière qu'il se produit sur la surface dudit conteneur métallique un film en plastique conducteur, résistant aux alcalis,
   c) insérer des composantes d'une batterie alcaline dans ledit conteneur métallique, et
   d) mettre en place un matériau d'étanchéité entre le joint en plastique et la surface intérieure dudit conteneur métallique.

13. Procédé de fabrication d'une pile alcaline électrochimique selon la revendication 12,
caractérisé en ce que
le conteneur métallique est en acier non plaqué.

**14.** Procédé de fabrication d'une pile alcaline électrochimique selon la revendication 12,
caractérisé en ce que
le matériau d'étanchéité est du bitume.

**15.** Procédé de fabrication d'une pile alcaline électrochimique selon la revendication 12,
caractérisé en ce que
le joint en plastique comporte du nylon ou du polypropylène.

**16.** Procédé de fabrication d'une pile alcaline électrochimique selon la revendication 12, ledit procédé
comprenant en outre la phase:
rendre étanche ladite pile alcaline en rabattant le bord existant à l'extrémité ouverte dudit conteneur
métallique.

**17.** Procédé selon la revendication 12,
caractérisé en ce que
le conteneur métallique est recouvert d'une résine polymère, résistant aux alcalis, comportant un liant
polymère conducteur, dissolu dans un solvant.

**18.** Procédé selon la revendication 12 ou 17,
caractérisé en ce que
le liant polymère ne se dissout pas dans l'électrolyte alcalin.

**19.** Procédé selon la revendication 12, 17 ou 18,
caractérisé en ce que
le liant polymère n'est pas hydrolysé ou oxydé par l'électrolyte alcalin.

**20.** Procédé selon l'une quelconque des revendications 12, 17, 18 et 19,
caractérisé en ce que
le solvant mouille la surface du conteneur métallique.

**21.** Procédé selon l'une quelconque des revendications 12 à 20,
caractérisé en ce que
la résine polymère conductrice, résistant aux alcalis, comporte des matières de charge qui sont des
particules de charbon choisies dans le groupe comprenant le noir d'acétylène et le graphite.

**22.** Procédé selon la revendication 21,
caractérisé en ce que
les matières de charge sont présentes dans une quantité pouvant se monter, en pour-cent en poids,
jusqu'à 40.

**23.** Procédé selon l'une quelconque des revendications 12 ou 17 à 22,
caractérisé en ce que
le couchage conducteur, résistant aux alcalis, est appliqué en une quantité de manière qu'il se produit
un film en plastique d'une épaisseur de 2,5 $\mu$m à 50 $\mu$m, de préférence entre 15 $\mu$m et 20 $\mu$m.

**24.** Procédé selon la revendication 12, ou I7 à 23,
caractérisé en ce que
la résine polymère est appliquée au conteneur en métal seulement dans la zone où le joint/le matériau
d'étanchéité et le conteneur en métal se touchent.


**Ansprüche**

**1.** Alkalische elektrochemische Zelle mit einer Abdichtung aus einem zwischen der Innenfläche eines
unplattierten metallischen Behälters (2), der als positiver Stromsammler dient, und einer Dichtung (6)
aus Kunststoff angeordnetem Dichtungsmittel,
dadurch gekennzeichnet, daß
die unplattierte Innenfläche des metallischen Behälters (2) mit einem alkalifesten, elektrisch leitfähigen

EP 0 173 187 B1

Überzug (14) aus Kunststoff versehen ist.

2. Alkalische elektrochemische Zelle nach Anspruch 1, bei der das Dichtungsmittel Bitumen ist.

3. Alkalische elektrochemische Zelle nach Anspruch 1 oder 2, bei der die Dichtung (6) aus Kunststoff Nylon oder Polypropylen umfaßt.

4. Alkalische elektrochemische Zelle nach Anspruch 1, 2 oder 3,
bei der der alkalifeste, elektrisch leitfähige Überzug (14) aus Kunststoff elektrisch leitfähige Füllstoffe umfaßt.

5. Alkalische elektrochemische Zelle nach Anspruch 4, bei der die elektrisch leitfähigen Füllstoffe Kohlepartikel aus der Gruppe mit Acetylenruß, Lampenruß und Graphit sind.

6. Alkalische elektrochemische Zelle nach Anspruch 1 oder 5, bei der der Gewichtsprozentsatz der genannten Füllstoffe bis zu 40 beträgt.

7. Alkalische elektrochemische Zelle nach Anspruch 1, bei der der metallische Behälter (2) aus unplattiertem Stahl ist.

8. Alkalische elektrochemische Zelle nach einem der Ansprüche 1 bis 7, dadurch gekennzeichnet, daß der Überzug aus Kunststoff nur in dem Bereich, in dem sich Dichtung/Dichtungsmittel und metallischer Behälter berühren, vorgesehen ist.

9. Alkalische elektrochemische Zelle nach einem der Ansprüche 1 bis 8,
dadurch gekennzeichnet, daß
der Überzug aus Kunststoff 2,5 bis 50 μm, vorzugsweise 15 bis 20 μm dick ist.

10. Alkalische elektrochemische Zelle nach Anspruch 1,
bei der der alkalifeste, elektrisch leitfähige Überzug im alkalischen Elektrolyten nicht löslich ist.

11. Alkalische elektrochemische Zelle nach Anspruch 1,
bei der der alkalifeste, elektrisch leitfähige Überzug im alkalischen Elektrolyten nicht hydrolysiert oder oxidiert wird.

12. Verfahren zum Herstellen einer alkalischen elektrochemischen Zelle nach Anspruch 1,
gekennzeichnet durch die folgenden Arbeitsschritte:
a) Überziehen der unplattierten Innenfläche des unplattierten metallischen Behälters, der als positiver Stromsammler dient, mit einem alkalifesten, elektrisch leitfähigen Polymer-Harz,
b) Trocknen des Überzugs aus Polymer-Harz in der Weise, daß auf der Oberfläche des metallischen Behälters ein alkalifester, elektrisch leitfähiger Kunststoff-Film entsteht,
c) Einsetzen von Alkalibatterie-Komponenten in den metallischen Behälter, und
d) Anordnen eines Dichtungsmittels zwischen einer Kunststoff-Dichtung und der Innenfläche des metallischen Behälters.

13. Verfahren zum Herstellen einer alkalischen elektrochemischen Zelle nach Anspruch 12,
dadurch gekennzeichnet, daß
der metallische Behälter aus unplattiertem Stahl ist.

14. Verfahren zum Herstellen einer alkalischen elektrochemischen Zelle nach Anspruch 12,
dadurch gekennzeichnet, daß
das Dichtungsmittel Bitumen ist.

15. Verfahren zum Herstellen einer alkalischen elektrochemischen Zelle nach Anspruch 12,
dadurch gekennzeichnet, daß
die Kunststoff-Dichtung Nylon oder Polypropylen umfaßt.

16. Verfahren zum Herstellen einer alkalischen elektrochemischen Zelle nach Anspruch 12, das weiterhin den Arbeitsschritt umfaßt:
Abdichten der alkalischen Zelle durch Umbördeln des offenen Endes des metallischen Behälters.

17. Verfahren nach Anspruch 12,
dadurch gekennzeichnet, daß
der metallische Behälter mit einem alkalifesten Polymer-Harz überzogen wird, das einen in einem Lösungsmittel gelösten elektrisch leitfähigen Polymer-Binder umfaßt.

18. Verfahren nach Anspruch 12 oder 17,
dadurch gekennzeichnet, daß
der Polymer-Binder sich im alkalischen Elektrolyten nicht löst.

19. Verfahren nach Anspruch 12, 17 oder 18,
dadurch gekennzeichnet, daß
der Polymer-Binder durch den alkalischen Elektrolyten nicht hydrolysiert oder oxidiert wird.

20. Verfahren nach Anspruch 12, 17, 18 oder 19,
dadurch gekennzeichnet, daß
das Lösungsmittel die Oberfläche des metallischen Behälters benetzt.

21. Verfahren nach einem der Ansprüche 12 bis 20,
dadurch gekennzeichnet, daß
das alkalifeste, elektrisch leitfähige Polymer-Harz Füllstoffe umfaßt, die aus der Gruppe mit Acetylenruß und Graphit gewählte Kohlepartikel sind.

22. Verfahren nach Anspruch 21,
dadurch gekennzeichnet, daß
die Füllstoffe in solcher Menge vorhanden sind, daß ihr Gewichtsprozentsatz bis zu 40 beträgt.

23. Verfahren nach einem der Ansprüche 12 oder 17 bis 22,
dadurch gekennzeichnet, daß
der alkalifeste, elektrisch leitfähige Überzug in solcher Menge aufgetragen wird, daß ein Kunststoff-Film von 2,5 bis 50 $\mu$m, vorzugsweise von 15 $\mu$m bis 20 $\mu$m Dicke entsteht.

24. Verfahren nach Anspruch 12, oder 17 oder 23,
dadurch gekennzeichnet, daß
das Polymer-Harz auf den Metall-Behälter nur in dem Bereich aufgetragen wird, in dem sich Dichtung/Dichtungsmittel und Metall-Behälter berühren.

## FIGURE

## ALKALINE CELL